# EUROPEAN PATENT APPLICATION

(11) **EP 4 819 163 A1**
(43) Date of publication of application: **07.10.2026**
(21) Application number: 24895955.3
(22) Date of filing: 25.09.2024
(51) Int. Cl.: G21D 3/00

(54) **DATA CORRECTION METHOD AND APPARATUS FOR NUCLEAR REACTOR CORE, AND COMPUTER DEVICE**

(30) Priority: 29.11.2023 CN 202311615072
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: WANG, Weiru, Shenzhen, Guangdong 518031 (CN); HU, Yisong, Shenzhen, Guangdong 518031 (CN); MAO, Yulong, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); FENG, Yingjie, Shenzhen, Guangdong 518031 (CN); LI, Kejia, Shenzhen, Guangdong 518031 (CN); CHEN, Tianming, Shenzhen, Guangdong 518031 (CN); MENG, Shuqi, Shenzhen, Guangdong 518031 (CN); ZHANG, Wei, Shenzhen, Guangdong 518031 (CN)
(74) Representative: Greaves Brewster LLP
(86) International application number: PCT/CN2024/121146
(87) International publication number: WO 2025/112859

(57) **Abstract**

The present application relates to a data correction method and apparatus for a nuclear reactor core, and a computer device. The method comprises: acquiring an actual departure from nucleate boiling ratio (DNBR) of a nuclear reactor core at an acquisition moment; acquiring a correction factor of the nuclear reactor core, the correction factor being obtained by processing a theoretical DNBR and self-powered neutron detector (SPND) detection signals of the nuclear reactor core, the first reactor core thermal channel position and calibration parameters of the nuclear reactor core in a calibration state, and the positions and number of failed SPNDs when there are the failed SPNDs in the nuclear reactor core; and using the correction factor to correct the actual DNBR so as to obtain a target DNBR of the nuclear reactor core at the acquisition moment. When there are the failed SPNDs in the nuclear reactor core, using the present method can efficiently and accurately correct actually acquired DNBRs.

## Description

### CROSS-REFERENCE TO RELATED APPLICATIONS

This application claims priority to Chinese Patent Application No. 2023116150722, entitled "DATA CORRECTION METHOD AND APPARATUS FOR NUCLEAR REACTOR CORE, AND COMPUTER DEVICE" and filed on November 29, 2023, the entire contents of which are incorporated herein by reference.

### TECHNICAL FIELD

The present application relates to the field of nuclear reactor core operation and safety technologies, and in particular, to a data correction method and apparatus for a nuclear reactor core, and a computer device.

### BACKGROUND

In thermal-hydraulic design and accident analysis of a reactor core in a nuclear power plant, calculation of a departure from nucleate boiling ratio (DNBR) of the core is of critical importance. The DNBR is an important parameter for judging whether operating conditions such as Condition I and Condition II meet acceptance criteria.

During operation of the nuclear power plant, self-powered neutron detectors (SPNDs) are exposed to irradiation conditions inside a nuclear reactor for a long time and some SPNDs are arranged inside the core. As a result, some SPNDs may fail and cannot be repaired or replaced within one fuel cycle. Loss of some SPND measurement points may lead to an increased deviation between a calculated core power distribution and an actual situation, thereby resulting in a significant deviation in the calculated DNBR and affecting the normal operation of the nuclear reactor core.

Therefore, to ensure operational safety of the nuclear reactor core, there is an urgent need for a solution that can accurately correct an actually acquired DNBR when some SPNDs fail.

### SUMMARY

Based on this, there is **a** need to provide, with respect to the above technical problems, a data correction method and apparatus for a nuclear reactor core, and a computer device, which can efficiently and accurately correct an actually acquired DNBR when there are failed SPNDs in the nuclear reactor core.

In a first aspect, the present application provides a data correction method for a nuclear reactor core, including:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

In some embodiments, the method further includes:
simulating core operating states of the nuclear reactor core to obtain the theoretical DNBR and the SPND detection signals; and
simulating the calibration state of the nuclear reactor core to obtain the first core hot channel position and the calibration parameters, wherein the calibration state is any one of the core operating states.

In some embodiments, processing the theoretical DNBR and the SPND detection signals of the nuclear reactor core, the first core hot channel position and the calibration parameters of the nuclear reactor core in the calibration state, and the positions of the failed SPNDs and the number of the failed SPNDs in the nuclear reactor core includes:
determining, by using a core power reconstruction algorithm, a reconstructed core power distribution of the nuclear reactor core according to the SPND detection signals and the calibration parameters;
determining a first distance according to the first core hot channel position and the positions of the failed SPNDs; and
determining the correction factor according to the reconstructed core power distribution, the positions of the failed SPNDs, the number of the failed SPNDs, the first distance, and the theoretical DNBR.

In some embodiments, determining the correction factor according to the reconstructed core power distribution, the positions of the failed SPNDs, the number of the failed SPNDs, the first distance, and the theoretical DNBR includes:
determining a reconstructed DNBR and a second core hot channel position of the nuclear reactor core according to the reconstructed core power distribution; and
determining the correction factor according to the reconstructed DNBR, the second core hot channel position, the positions of the failed SPNDs, the number of the failed SPNDs, the first distance, and the theoretical DNBR.

In some embodiments, determining the correction factor according to the reconstructed DNBR, the second core hot channel position, the positions of the failed SPNDs, the number of the failed SPNDs, the first distance, and the theoretical DNBR includes:
determining a DNBR deviation according to the reconstructed DNBR and the theoretical DNBR;
determining a second distance according to the positions of the failed SPNDs and the second core hot channel position; and
determining the correction factor according to the first distance, the second distance, the number of the failed SPNDs, and the DNBR deviation.

In some embodiments, correcting the actual DNBR by using the correction factor, to obtain the target DNBR of the nuclear reactor core at the acquisition moment includes:
taking a sum of the correction factor and the actual DNBR as the target DNBR of the nuclear reactor core at the acquisition moment.

In a second aspect, the present application further provides a data correction apparatus for a nuclear reactor core, including:
a data acquisition module, configured to acquire an actual DNBR of the nuclear reactor core at an acquisition moment;
a factor acquisition module, configured to acquire a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
a data correction module, configured to correct the actual DNBR by using the correction factor, to obtain a target DNBR of the nuclear reactor core at the acquisition moment.

In a third aspect, the present application further provides a computer device, including a memory and a processor, the memory storing a computer program, and the processor, when executing the computer program, implementing the following steps:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

In a fourth aspect, the present application further provides a computer-readable storage medium, having a computer program stored therein, wherein the computer program, when executed by a processor, implements the following steps:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

In a fifth aspect, the present application further provides a computer program product, including a computer program, wherein the computer program, when executed by a processor, implements the following steps:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

Compared with obtaining the directly acquired actual DNBR of the nuclear reactor core, in the above data correction method and apparatus for a nuclear reactor core and computer device, by introducing a correction factor determined according to the theoretical DNBR and the SPND detection signals of the nuclear reactor core, the first core hot channel position and the calibration parameters of the nuclear reactor core in a calibration state, and positions of failed SPNDs and a number of the failed SPNDs when there are the failed SPNDs in the nuclear reactor core, the acquired actual DNBR of the nuclear reactor core at the acquisition moment is corrected, which can more accurately determine the target DNBR of the nuclear reactor core, thereby achieving an effect of improving operational safety of the nuclear reactor core.

The foregoing description is only an overview of the technical solutions of the present application. To more clearly understand the technical means of the present application to implement the technical solutions in accordance with the content of the description and to make the above and other objectives, features, and advantages of the present application more apparent and understandable, specific implementations of the present application are set forth below.

### BRIEF DESCRIPTION OF THE DRAWINGS

Various other advantages and benefits will become apparent to those of ordinary skill in the art upon reading the detailed description of the implementations below. The accompanying drawings are only for the purpose of illustrating the implementations and are not to be considered as limiting the present application. Moreover, the same reference numerals are used to denote the same components throughout all the drawings. In the accompanying drawings:
FIG. 1 is a schematic flowchart of a data correction method for a nuclear reactor core according to an embodiment;
FIG. 2 is a schematic flowchart of determining a correction factor according to an embodiment;
FIG. 3 is a schematic flowchart of determining a correction factor according to another embodiment;
FIG. 4 is a schematic flowchart of determining a correction factor according to yet another embodiment;
FIG. 5 is a schematic flowchart of a data correction method for a nuclear reactor core according to another embodiment;
FIG. 6 is a structural block diagram of a data correction apparatus for a nuclear reactor core according to an embodiment;
FIG. 7 is a structural block diagram of a data correction apparatus for a nuclear reactor core according to an embodiment;
FIG. 8 is a structural block diagram of a data correction apparatus for a nuclear reactor core according to another embodiment; and
FIG. 9 is a diagram of an internal structure of a computer device according to an embodiment.

### DETAILED DESCRIPTION

Embodiments of the technical solutions of the present application will be described in detail below with reference to the accompanying drawings. The following embodiments are only used to illustrate the technical solutions of the present application more clearly, and therefore are only examples, and shall not be used to limit the scope of protection of the present application.

Unless otherwise defined, all technical and scientific terms used herein have the same meaning as commonly understood by those of ordinary skill in the technical field to which the present application belongs. The terms used herein are for the purpose of describing specific embodiments only and are not intended to limit the present application. The terms "comprising/including" and "having" and any variations thereof in the specification and claims of the present application and the above description of the accompanying drawings are intended to cover non-exclusive inclusion.

In the description of the embodiments of the present application, the technical terms "first", "second", and the like are only used to distinguish different objects and shall not be interpreted as indicating or implying relative importance or implying the number, specific order, or primary-secondary relationship of the indicated technical features. In the description of the embodiments of the present application, "a plurality of" means two or more, unless otherwise explicitly and specifically limited.

The "embodiments" mentioned herein means that particular features, structures or characteristics described with reference to the embodiments may be included in at least one embodiment of the present application. Phrases appearing at various positions of the specification neither always refer to the same embodiment, nor separate or alternative embodiments that are mutually exclusive with other embodiments. It is explicitly and implicitly understood by those skilled in the art that the embodiments described herein may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" herein generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the embodiments of the present application and simplify the description only, rather than indicating or implying that the apparatus or element referred to must have a particular orientation or be constructed and operated in a particular orientation, and therefore are not to be interpreted as limiting the embodiments of the present application.

In the description of the embodiments of the present application, unless otherwise specified and defined explicitly, the terms "mount", "connect", "join", and "fix" should be understood in a broad sense, which may be, for example, a fixed connection, a detachable connection, or an integral connection; a mechanical connection or an electrical connection; or a direct connection, an indirect connection via an intermediate medium, an internal connection between two elements, or interaction between two elements. Those of ordinary skill in the art can understand specific meanings of these terms in the embodiments of the present application according to specific situations.

The data correction method for a nuclear reactor core provided in the embodiments of the present application may be applied to scenarios where an actual DNBR of the nuclear reactor core acquired at an acquisition moment is corrected when there is SPND failure in the nuclear reactor core. In some embodiments, the method may be applied to a server environment. The data storage system may store data that the server needs to process, such as an actual DNBR and a correction factor. The data storage system may be integrated on a server or may be placed on a cloud or another network server.

Specifically, when there is SPND failure in the nuclear reactor core, the server may acquire an actual DNBR of the nuclear reactor core at an acquisition moment, and acquire a correction factor determined according to a theoretical DNBR and SPND detection signals of the nuclear reactor core, a first reactor core hot channel position and calibration parameters of the nuclear reactor core in a calibration state, and positions of failed SPNDs and a number of the failed SPNDs when there are the failed SPNDs in the nuclear reactor core. In some embodiments, the acquired actual DNBR is corrected by using the correction factor, to obtain a target DNBR of the nuclear reactor core at the acquisition moment. The server may be implemented as a standalone server or as a server cluster including a plurality of servers.

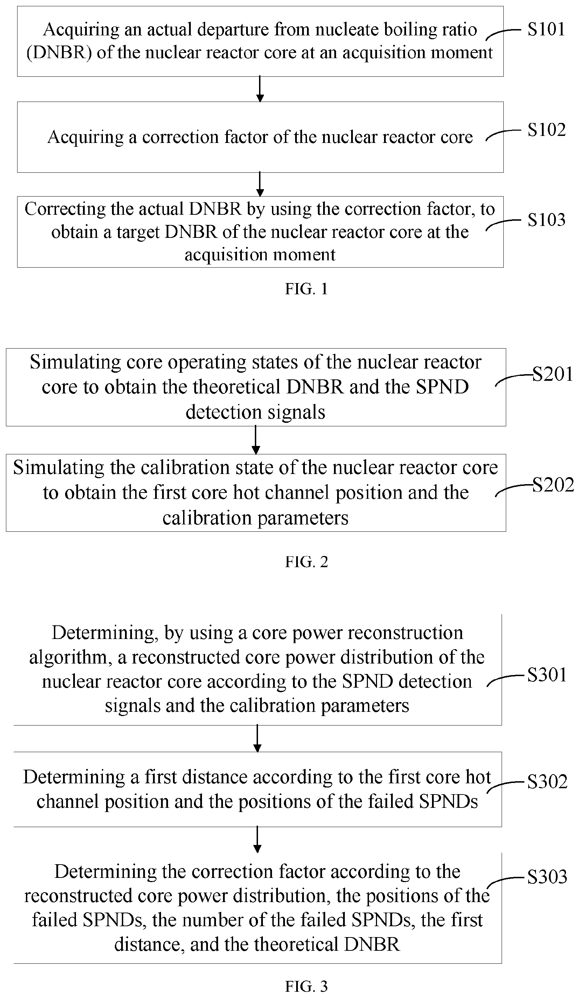

In an exemplary embodiment, as shown in FIG. 1, a data correction method for a nuclear reactor core is provided. The method is described by taking application to a server as an example. It may be understood that the method may also be applied to a system including a terminal and a server, and be implemented through interaction between the terminal and the server. The method includes the following step S101 to step S103.

In S101, an actual DNBR of the nuclear reactor core at an acquisition moment is acquired.

The acquisition moment is a moment at which a DNBR is acquired. The actual DNBR is an actual DNBR obtained through acquisition.

In some embodiments, when there is SPND failure in the nuclear reactor core and the DNBR of the nuclear reactor core is required to be corrected, the actual DNBR of the nuclear reactor core at the acquisition moment may be acquired.

In S102, a correction factor of the nuclear reactor core is acquired.

The correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core. The theoretical DNBR is a DNBR of the nuclear reactor core on the assumption that none of the SPNDs in the nuclear reactor core fails. The SPND detection signals are detection signals acquired by the SPNDs when none of the SPNDs fails. The calibration state is any specified operating state of the nuclear reactor core. The first core hot channel position is a hot channel position of the nuclear reactor core in the calibration state. The calibration parameters are parameters of the nuclear reactor core in the calibration state. The positions of the failed SPNDs are positions of the failed SPNDs when there are failed SPND in the nuclear reactor core. The number of the failed SPNDs is a count of failed SPNDs when there are failed SPND in the nuclear reactor core. For example, according to a data correction requirement for the nuclear reactor core, a certain number of SPNDs may be randomly selected from all SPNDs of the nuclear reactor core (e.g., 15 failed SPNDs may be randomly selected) as failed SPNDs, the number may be taken as the number of the failed SPNDs, and the positions of the failed SPNDs may be determined.

In some embodiments, if the data storage system stores the correction factor of the nuclear reactor core, the correction factor of the nuclear reactor core may be acquired directly from the data storage system. If the data storage system does not store the correction factor of the nuclear reactor core, the theoretical DNBR and the SPND detection signals of the nuclear reactor core when none of the SPNDs fails, the first core hot channel position and the calibration parameters of the nuclear reactor core in the calibration state when none of the SPNDs fails, and positions of failed SPNDs and a number of the failed SPNDs when there are the failed SPNDs in the nuclear reactor core may be acquired and processed, thereby obtaining the correction factor of the nuclear reactor core.

In S103, the actual DNBR is corrected by using the correction factor, to obtain a target DNBR of the nuclear reactor core at the acquisition moment.

The target DNBR is a corrected DNBR of the nuclear reactor core at the acquisition moment.

In some embodiments, after the actual DNBR of the nuclear reactor core at the acquisition moment and the correction factor of the nuclear reactor core are acquired, the actual DNBR may be corrected based on a preset correction logic by using the correction factor, to obtain the target DNBR of the nuclear reactor core at the acquisition moment. For example, a product of the correction factor and the actual DNBR of the nuclear reactor core may be taken as the target DNBR of the nuclear reactor core at the acquisition moment.

Compared with obtaining the directly acquired actual DNBR of the nuclear reactor core, in the above data correction method for a nuclear reactor core, by introducing a correction factor determined according to the theoretical DNBR and the SPND detection signals of the nuclear reactor core, the first core hot channel position and the calibration parameters of the nuclear reactor core in a calibration state, and positions of failed SPNDs and a number of the failed SPNDs when there are the failed SPNDs in the nuclear reactor core, the acquired actual DNBR of the nuclear reactor core at the acquisition moment is corrected, which can more accurately determine the target DNBR of the nuclear reactor core, thereby achieving an effect of improving operational safety of the nuclear reactor core.

To determine the target DNBR of the nuclear reactor core more accurately, based on the above embodiments, in one embodiment, an implementable manner is provided for S103, in which a sum of the correction factor and the actual DNBR may be taken as the target DNBR of the nuclear reactor core at the acquisition moment.

In some embodiments, after the correction factor and the actual DNBR of the nuclear reactor core at the acquisition moment, the sum of the correction factor and the actual DNBR of the nuclear reactor core may be determined using the following formula (1): ${DNBR}_{corr} = {DNBR}_{cal} + f$ (1) where *DNBR_{corr}* denotes the target DNBR of the nuclear reactor core at the acquisition moment; *DNBR_{cal}* denotes the actual DNBR of the nuclear reactor core at the acquisition moment; and f denotes the correction factor of the nuclear reactor core.

In some embodiments, a sum of the correction factor and the actual DNBR may be taken as the target DNBR of the nuclear reactor core at the acquisition moment.

It may be understood that taking the sum of the correction factor and the actual DNBR as the target DNBR of the nuclear reactor core at the acquisition moment can achieve more efficient and accurate determination of the target DNBR.

To determine the correction factor of the nuclear reactor core more accurately, in an exemplary embodiment, as shown in FIG. 2, S102 above may include step S201 to step S202.

In S201, core operating states of the nuclear reactor core are simulated to obtain the theoretical DNBR and the SPND detection signals.

The core operating states may include a normal operating state and an accident operating state of the nuclear reactor core.

In some embodiments, the core operating states of the nuclear reactor core may be simulated by using pre-installed simulation software, to obtain the SPND detection signals of the nuclear reactor core in the operating states and power distribution of the nuclear reactor core. In some embodiments, the theoretical DNBR of the nuclear reactor core may be obtained based on a preset calculation logic and the power distribution of the nuclear reactor core.

In S202, the calibration state of the nuclear reactor core is simulated to obtain the first core hot channel position and the calibration parameters.

The calibration state is any one of the core operating states.

In some embodiments, the calibration state of the nuclear reactor core may be simulated by using pre-installed simulation software, thereby acquiring a hot channel position of the nuclear reactor core in the calibration state as the first core hot channel position, and acquiring the calibration parameters of the nuclear reactor core in the calibration state.

It may be understood that by simulating the core operating states and the calibration state of the nuclear reactor core, the theoretical DNBR, the SPND detection signals, the first core hot channel position, and the calibration parameters can be acquired more accurately, thereby achieving an effect of improving accuracy of determination of the correction factor of the nuclear reactor core.

To improve accuracy of determination of the correction factor, in an exemplary embodiment, as shown in FIG. 3, S102 above is further refined, which may specifically include step S301 to step S303.

In S301, a reconstructed core power distribution of the nuclear reactor core is determined according to the SPND detection signals and the calibration parameters by using a core power reconstruction algorithm.

The core power reconstruction algorithm is an algorithm used to reconstruct and calculate the power distribution of the nuclear reactor core, and may include a weight coefficient method, a thin plate spline function method, a polynomial expansion method, an ordinary Kriging method, and the like.

In some embodiments, after the SPND detection signals and the calibration parameters of the nuclear reactor core are determined, the SPND detection signals and the calibration parameters may be inputted into the core power reconstruction algorithm, and the nuclear reactor core is reconstructed and calculated by using the core power reconstruction algorithm, to determine a reconstructed power distribution of the nuclear reactor core.

In S302, a first distance is determined according to the first core hot channel position and the positions of the failed SPNDs.

The first distance is a distance between a hot channel of the nuclear reactor core when none of the SPNDs fails and failed SPNDs in the nuclear reactor core.

In some embodiments, the first core hot channel position and the positions of the failed SPNDs may be calculated based on a preset distance calculation logic, to determine the first distance between the hot channel of the nuclear reactor core when none of the SPNDs fails and the failed SPNDs in the nuclear reactor core.

In S303, the correction factor is determined according to the reconstructed core power distribution, the positions of the failed SPNDs, the number of the failed SPNDs, the first distance, and the theoretical DNBR.

In some embodiments, after the reconstructed core power distribution of the nuclear reactor core and the first distance are determined, the reconstructed core power distribution, the positions of the failed SPNDs, the number of the failed SPNDs, the first distance, and the theoretical DNBR may be inputted into a pre-trained correction factor determination model, and the correction factor of the nuclear reactor core is determined through the correction factor determination model.

It may be understood that by using the core power reconstruction algorithm, the reconstructed core power distribution of the nuclear reactor core can be determined more accurately. Furthermore, the first distance can be accurately determined according to the first core hot channel position and the positions of the failed SPNDs. In some embodiments, an effect of more accurately determining the correction factor can be achieved according to the reconstructed core power distribution, the first distance, the positions of the failed SPNDs, the number of the failed SPNDs, and the theoretical DNBR.

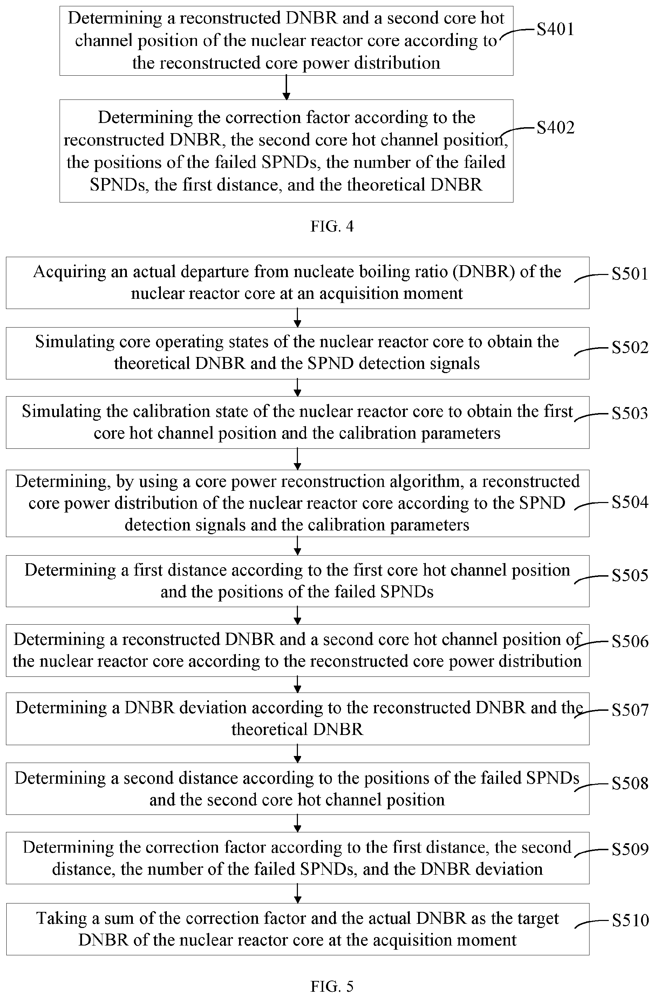

On the basis of the above embodiments, in an exemplary embodiment, as shown in FIG. 4, S303 above is further refined, which may specifically include step S401 to step S402.

In S401, a reconstructed DNBR and a second core hot channel position of the nuclear reactor core are determined according to the reconstructed core power distribution.

The reconstructed DNBR is a DNBR of the nuclear reactor core obtained through reconstruction calculation. The second core hot channel position is a hot channel position of the nuclear reactor core obtained through reconstruction calculation.

In some embodiments, after the reconstructed power distribution of the nuclear reactor core is determined, the reconstructed DNBR of the nuclear reactor core may be determined based on a preset calculation logic according to the reconstructed core power distribution. In some embodiments, the nuclear reactor core obtained through reconstruction calculation may be analyzed according to the reconstructed core power distribution, to determine the second core hot channel position.

In S402, the correction factor is determined according to the reconstructed DNBR, the second core hot channel position, the positions of the failed SPNDs, the number of the failed SPNDs, the first distance, and the theoretical DNBR.

In some embodiments, after the reconstructed DNBR and the second core hot channel position of the nuclear reactor core are determined, the reconstructed DNBR, the second core hot channel position, the positions of the failed SPNDs, the number of the failed SPNDs, the first distance, and the theoretical DNBR may be inputted into a pre-trained correction factor determination model, and the correction factor of the nuclear reactor core is determined through the correction factor determination model.

It may be understood that by using the reconstructed core power distribution, the reconstructed DNBR and the second core hot channel position of the nuclear reactor core can be accurately determined. In some embodiments, according to the reconstructed DNBR, the second core hot channel position, the positions of the failed SPNDs, the number of the failed SPNDs, the first distance, and the theoretical DNBR, an effect of improving accuracy of determination of the correction factor can be achieved.

In an exemplary embodiment, an implementable manner is provided for S402 above: after the reconstructed DNBR and the second core hot channel position of the nuclear reactor core are determined, a DNBR deviation may be determined according to the reconstructed DNBR and the theoretical DNBR; a second distance may be determined according to the positions of the failed SPNDs and the second core hot channel position; and the correction factor may be determined according to the first distance, the second distance, the number of the failed SPNDs, and the DNBR deviation.

The DNBR deviation is a deviation between the theoretical DNBR of the nuclear reactor core and the reconstructed DNBR of the nuclear reactor core obtained through reconstruction calculation. The second distance is a distance between the hot channel of the nuclear reactor core obtained through reconstruction calculation and the failed SPND in the nuclear reactor core.

In some embodiments, after the reconstructed DNBR and the second core hot channel position of the nuclear reactor core are determined, a difference between the reconstructed DNBR and the theoretical DNBR may be calculated, and this difference is taken as the DNBR deviation of the nuclear reactor core. In some embodiments, based on a preset distance calculation logic, the second core hot channel position and the positions of the failed SPNDs may be calculated to determine a second distance between the hot channel of the nuclear reactor core obtained through reconstruction calculation when none of the SPNDs fails and the failed SPND in the nuclear reactor core. The DNBR deviation, the number of the failed SPNDs, the first distance, and the second distance may be inputted into a pre-built correction factor calculation model. By using the correction factor calculation model, data fitting is performed on the DNBR deviation, the number of the failed SPNDs, the first distance, and the second distance, thereby determining the correction factor of the nuclear reactor core.

It should be noted that by determining the DNBR deviation of the nuclear reactor core, the number of the failed SPNDs, and the second distance of the nuclear reactor core, in combination with the first distance of the nuclear reactor core, accuracy of determination of the correction factor can be improved, thereby achieving an effect of more accurately determining the target DNBR of the nuclear reactor core at the acquisition moment.

In an embodiment, as shown in FIG. 5, a preferred example of the data correction method for a nuclear reactor core is provided. A specific process is as follows:

In S501, an actual DNBR of the nuclear reactor core at an acquisition moment is acquired.

In S502, core operating states of the nuclear reactor core are simulated to obtain the theoretical DNBR and the SPND detection signals.

In S503, the calibration state of the nuclear reactor core is simulated to obtain the first core hot channel position and the calibration parameters.

The calibration state is any one of the core operating states.

In S504, a reconstructed core power distribution of the nuclear reactor core is determined according to the SPND detection signals and the calibration parameters by using a core power reconstruction algorithm.

In S505, a first distance is determined according to the first core hot channel position and the positions of the failed SPNDs.

In S506, a reconstructed DNBR and a second core hot channel position of the nuclear reactor core are determined according to the reconstructed core power distribution.

In S507, a DNBR deviation is determined according to the reconstructed DNBR and the theoretical DNBR.

In S508, a second distance is determined according to the positions of the failed SPNDs and the second core hot channel position.

In S509, the correction factor is determined according to the first distance, the second distance, the number of the failed SPNDs, and the DNBR deviation.

In S510, a sum of the correction factor and the actual DNBR is taken as the target DNBR of the nuclear reactor core at the acquisition moment.

For a specific process of S501 to S510 described above, reference may be made to the description of the method embodiments above. Implementation principles and technical effects thereof are similar, and details are not described herein again.

It should be understood that, although the steps in the flowcharts involved in the above embodiments are shown in sequence as indicated by arrows, these steps are not necessarily executed sequentially in the order indicated by the arrows. Unless otherwise clearly specified herein, the steps are performed without any strict sequence limitation, and the steps may be performed in other orders. Moreover, at least some of the steps in the flowcharts involved in the above embodiments may include a plurality of steps or a plurality of stages. These steps or stages are not necessarily completed at the same moment, but may be executed at different moments. The order of execution of these steps or stages is not necessarily sequential, but may be performed in turn or alternately with other steps or with at least a portion of steps or stages of other steps.

Based on the same inventive concept, an embodiment of the present application further provides a data correction apparatus for a nuclear reactor core for implementing the data correction method for a nuclear reactor core as described above. The implementation solution to the problem provided by the apparatus is similar to the implementation solution described in the above method. Therefore, for the specific limitations in the one or more embodiments of the data correction apparatus for a nuclear reactor core provided below, reference may be made to the limitations described above for the data correction method for a nuclear reactor core. Details are not described herein again.

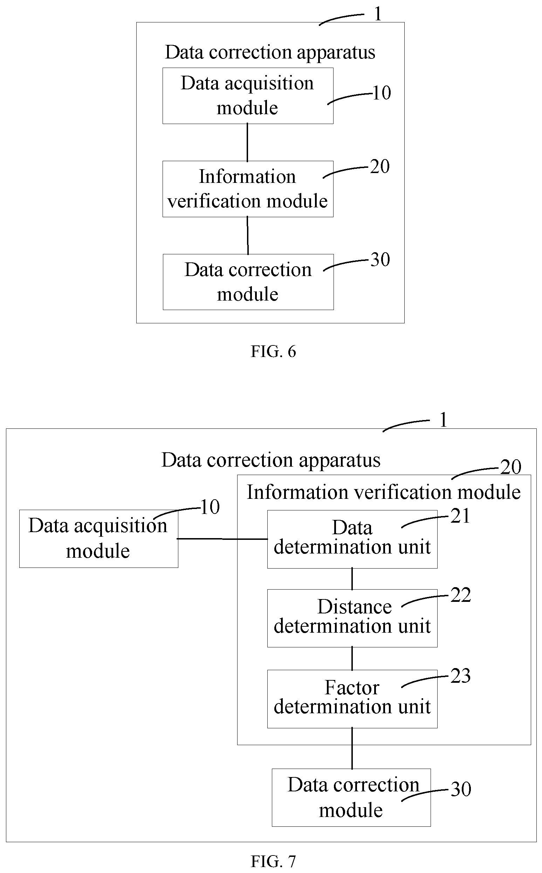

In an exemplary embodiment, as shown in FIG. 6, a data correction apparatus 1 for a nuclear reactor core is provided, including: a data acquisition module 10, a factor acquisition module 20, and a data correction module 30.

The data acquisition module 10 is configured to acquire an actual DNBR of the nuclear reactor core at an acquisition moment.

The factor acquisition module 20 is configured to acquire a correction factor of the nuclear reactor core.

The correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and

The data correction module 30 is configured to correct the actual DNBR by using the correction factor, to obtain a target DNBR of the nuclear reactor core at the acquisition moment.

In an exemplary embodiment, the factor acquisition module 20 may be configured to:
simulate core operating states of the nuclear reactor core to obtain the theoretical DNBR and the SPND detection signals; and simulate the calibration state of the nuclear reactor core to obtain the first core hot channel position and the calibration parameters, wherein the calibration state is any one of the core operating states.

In an exemplary embodiment, on the basis of FIG. 6, as shown in FIG. 7, the factor acquisition module 20 may include:
a data determination unit 21, configured to determine a reconstructed core power distribution of the nuclear reactor core according to the SPND detection signals and the calibration parameters by using a core power reconstruction algorithm;
a distance determination unit 22, configured to determine a first distance according to the first core hot channel position and the positions of the failed SPNDs; and
a factor determination unit 23, configured to determine the correction factor according to the reconstructed core power distribution, the positions of the failed SPNDs, the number of the failed SPNDs, the first distance, and the theoretical DNBR.

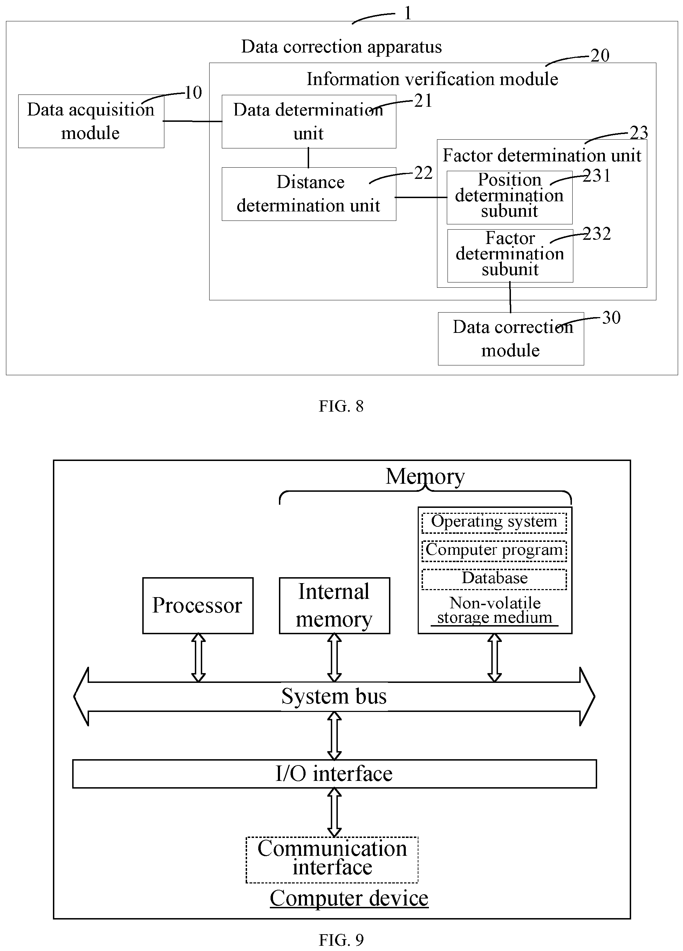

In an exemplary embodiment, on the basis of FIG. 6 or FIG. 7, as shown in FIG. 8, the factor determination module 23 may include:
a position determination subunit 231, configured to determine a reconstructed DNBR and a second core hot channel position of the nuclear reactor core according to the reconstructed core power distribution; and
a factor determination subunit 232, configured to determine the correction factor according to the reconstructed DNBR, the second core hot channel position, the positions of the failed SPNDs, the number of the failed SPNDs, the first distance, and the theoretical DNBR.

In an exemplary embodiment, the factor determination subunit 232 may be specifically configured to:
determine a DNBR deviation according to the reconstructed DNBR and the theoretical DNBR; determine a second distance according to the positions of the failed SPNDs and the second core hot channel position; and determine the correction factor according to the first distance, the second distance, the number of the failed SPNDs, and the DNBR deviation.

In an exemplary embodiment, the data correction module 30 may be specifically configured to:
take a sum of the correction factor and the actual DNBR as the target DNBR of the nuclear reactor core at the acquisition moment.

Each module in the above data correction apparatus for a nuclear reactor core may be implemented wholly or partially by software, hardware, or a combination thereof. The above modules may be embedded in or independent of the processor in the computer device in the form of hardware, or may be stored in the memory of the computer device in the form of software, so that the processor can call and execute the operations corresponding to the above modules.

In an exemplary embodiment, a computer device is provided. The computer device may be a server, and a diagram of an internal structure thereof may be as shown in FIG. 9. The computer device includes a processor, a memory, an input/output interface (I/O), and a communication interface. The processor, the memory, and the I/O interface are connected through a system bus, and the communication interface is connected to the system bus through the I/O interface. The processor of the computer device is used to provide computing and control capabilities. The memory of the computer device includes a non-volatile storage medium and an internal memory. The non-volatile storage medium stores an operating system, a computer program, and a database. The internal memory provides an environment for the operation of the operating system and the computer program in the non-volatile storage medium. The database of the computer device is used to store data such as an actual DNBR and a correction factor. The I/O interface of the computer device is configured to exchange information between the processor and an external device. The communication interface of the computer device is configured to communicate with an external terminal via a network connection. The computer program, when executed by the processor, implements a data correction method for a nuclear reactor core.

Those skilled in the art may understand that the structure shown in FIG. 9 is merely a block diagram of part of the structure related to the solution of the present application, and does not constitute a limitation on the computer device to which the solution of the present application is applied. The specific computer device may include more or fewer components than those shown in the figure, or combine certain components, or have a different arrangement of components.

In an exemplary embodiment, a computer device is provided, including a memory and a processor. The memory stores a computer program. The processor, when executing the computer program, implements the following steps:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

In an embodiment, the processor, when executing the computer program, further implements the following steps:
simulating core operating states of the nuclear reactor core to obtain the theoretical DNBR and the SPND detection signals; and
simulating the calibration state of the nuclear reactor core to obtain the first core hot channel position and the calibration parameters, wherein the calibration state is any one of the core operating states.

In an embodiment, when executing the logic of the computer program to process the theoretical DNBR and the SPND detection signals of the nuclear reactor core, the first core hot channel position and the calibration parameters of the nuclear reactor core in the calibration state, and the positions of the failed SPNDs and the number of the failed SPNDs in the nuclear reactor core, the processor further implements the following steps:
determining, by using a core power reconstruction algorithm, a reconstructed core power distribution of the nuclear reactor core according to the SPND detection signals and the calibration parameters; determining a first distance according to the first core hot channel position and the positions of the failed SPNDs; and determining the correction factor according to the reconstructed core power distribution, the positions of the failed SPNDs, the number of the failed SPNDs, the first distance, and the theoretical DNBR.

In an embodiment, when executing the logic of the computer program to determine the correction factor according to the reconstructed core power distribution, the positions of the failed SPNDs, the number of the failed SPNDs, the first distance, and the theoretical DNBR, the processor further implements the following steps:
determining a reconstructed DNBR and a second core hot channel position of the nuclear reactor core according to the reconstructed core power distribution; and determining the correction factor according to the reconstructed DNBR, the second core hot channel position, the positions of the failed SPNDs, the number of the failed SPNDs, the first distance, and the theoretical DNBR.

In an embodiment, when executing the logic of the computer program to determine the correction factor according to the reconstructed DNBR, the second core hot channel position, the positions of the failed SPNDs, the number of the failed SPNDs, the first distance, and the theoretical DNBR, the processor further implements the following steps:
determining a DNBR deviation according to the reconstructed DNBR and the theoretical DNBR; determining a second distance according to the positions of the failed SPNDs and the second core hot channel position; and determining the correction factor according to the first distance, the second distance, the number of the failed SPNDs, and the DNBR deviation.

In an embodiment, when executing the logic of the computer program to correct the actual DNBR by using the correction factor, to obtain the target DNBR of the nuclear reactor core at the acquisition moment, the processor further implements the following step:
taking a sum of the correction factor and the actual DNBR as the target DNBR of the nuclear reactor core at the acquisition moment.

In an embodiment, a computer-readable storage medium is provided, having a computer program stored therein. The computer program, when executed by a processor, implements the following steps:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

In an embodiment, the computer program, when executed by the processor, further implements the following steps:
simulating core operating states of the nuclear reactor core to obtain the theoretical DNBR and the SPND detection signals; and simulating the calibration state of the nuclear reactor core to obtain the first core hot channel position and the calibration parameters, wherein the calibration state is any one of the core operating states.

In an embodiment, when the logic of processing the theoretical DNBR and the SPND detection signals of the nuclear reactor core when none of the SPNDs fails, the first core hot channel position and the calibration parameters of the nuclear reactor core in the calibration state when none of the SPNDs fails, and positions of failed SPNDs and a number of the failed SPNDs when there are the failed SPNDs in the nuclear reactor core is executed by the processor, the computer program further implements the following steps:
determining, by using a core power reconstruction algorithm, a reconstructed core power distribution of the nuclear reactor core according to the SPND detection signals and the calibration parameters; determining a first distance according to the first core hot channel position and the positions of the failed SPNDs; and determining the correction factor according to the reconstructed core power distribution, the positions of the failed SPNDs, the number of the failed SPNDs, the first distance, and the theoretical DNBR.

In an embodiment, when the logic of determining the correction factor according to the reconstructed core power distribution, the positions of the failed SPNDs, the first distance, and the theoretical DNBR is executed by the processor, the computer program further implements the following steps:
determining a reconstructed DNBR and a second core hot channel position of the nuclear reactor core according to the reconstructed core power distribution; and determining the correction factor according to the reconstructed DNBR, the second core hot channel position, the positions of the failed SPNDs, the number of the failed SPNDs, the first distance, and the theoretical DNBR.

In an embodiment, when the logic of determining the correction factor according to the reconstructed DNBR, the second core hot channel position, the positions of the failed SPNDs, the number of the failed SPNDs, the first distance, and the theoretical DNBR is executed by the processor, the computer program further implements the following steps:
determining a DNBR deviation according to the reconstructed DNBR and the theoretical DNBR; determining a second distance according to the positions of the failed SPNDs and the second core hot channel position; and determining the correction factor according to the first distance, the second distance, the number of the failed SPNDs, and the DNBR deviation.

In an embodiment, when the logic of correcting the actual DNBR by using the correction factor, to obtain the target DNBR of the nuclear reactor core at the acquisition moment is executed by the processor, the computer program further implements the following step:
taking a sum of the correction factor and the actual DNBR as the target DNBR of the nuclear reactor core at the acquisition moment.

In an embodiment, a computer program product is provided, including a computer program. The computer program, when executed by a processor, implements the following steps:
acquiring an actual DNBR of the nuclear reactor core at an acquisition moment;
acquiring a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.
In an embodiment, the computer program, when executed by the processor, further implements the following steps:
   simulating core operating states of the nuclear reactor core to obtain the theoretical DNBR and the SPND detection signals; and simulating the calibration state of the nuclear reactor core to obtain the first core hot channel position and the calibration parameters, wherein the calibration state is any one of the core operating states.

In an embodiment, when the logic of processing the theoretical DNBR and the SPND detection signals of the nuclear reactor core, the first core hot channel position and the calibration parameters of the nuclear reactor core in the calibration state, and the positions of the failed SPNDs and the number of the failed SPNDs in the nuclear reactor core is executed by the processor, the computer program further implements the following steps:
determining, by using a core power reconstruction algorithm, a reconstructed core power distribution of the nuclear reactor core according to the SPND detection signals and the calibration parameters; determining a first distance according to the first core hot channel position and the positions of the failed SPNDs; and determining the correction factor according to the reconstructed core power distribution, the positions of the failed SPNDs, the number of the failed SPNDs, the first distance, and the theoretical DNBR.

In an embodiment, when the logic of determining the correction factor according to the reconstructed core power distribution, the positions of the failed SPNDs, the number of the failed SPNDs, the first distance, and the theoretical DNBR is executed by the processor, the computer program further implements the following steps:
determining a reconstructed DNBR and a second core hot channel position of the nuclear reactor core according to the reconstructed core power distribution; and determining the correction factor according to the reconstructed DNBR, the second core hot channel position, the positions of the failed SPNDs, the number of the failed SPNDs, the first distance, and the theoretical DNBR.

In an embodiment, when the logic of determining the correction factor according to the reconstructed DNBR, the second core hot channel position, the positions of the failed SPNDs, the number of the failed SPNDs, the first distance, and the theoretical DNBR is executed by the processor, the computer program further implements the following steps:
determining a DNBR deviation according to the reconstructed DNBR and the theoretical DNBR; determining a second distance according to the positions of the failed SPNDs and the second core hot channel position; and determining the correction factor according to the first distance, the second distance, the number of the failed SPNDs, and the DNBR deviation.

In an embodiment, when the logic of correcting the actual DNBR by using the correction factor, to obtain the target DNBR of the nuclear reactor core at the acquisition moment is executed by the processor, the computer program further implements the following step:
taking a sum of the correction factor and the actual DNBR as the target DNBR of the nuclear reactor core at the acquisition moment.

It should be noted that the data involved in the present application (including, but not limited to, data such as an actual DNBR and a correction factor) are all fully authorized by all relevant parties, and collection, use, and processing of related data must comply with relevant regulations.

Those of ordinary skill in the art may understand that all or part of the processes in the methods of the above embodiments may be implemented by instructing relevant hardware through a computer program. The computer program may be stored in a non-volatile computer-readable storage medium. When executed, the computer program may include the processes of the above method embodiments. Any reference to the memory, storage, database, or other media used in the embodiments provided in the present application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase-change memory (PCM), a graphene memory, and the like. The volatile memory may include a random access memory (RAM) or an external cache memory, and the like. By way of illustration and not limitation, the RAM may be in various forms, such as a static random access memory (SRAM) or a dynamic random access memory (DRAM). The databases involved in the various embodiments provided in the present application may include at least one of a relational database and a non-relational database. The non-relational database may include a blockchain-based distributed database and the like, but is not limited thereto. The processor involved in the various embodiments provided in the present application may be a general-purpose processor, a central processing unit, a graphics processing unit, a digital signal processor, a programmable logic device, a data processing logic unit based on quantum computing, or the like, but is not limited thereto.

Finally, it should be noted that the above embodiments are only used to illustrate the technical solutions of the present application, and not to limit them. Although the present application has been described in detail with reference to the foregoing embodiments, those of ordinary skill in the art should understand that they may still modify the technical solutions described in the foregoing embodiments, or make equivalent substitutions for some or all of the technical features thereof. However, these modifications or substitutions do not cause the essence of the corresponding technical solutions to depart from the scope of the technical solutions of the embodiments of the present application, all of which should be encompassed within the scope of the claims and the description of the present application. In particular, as long as there is no structural conflict, various technical features mentioned in the various embodiments can be combined in any manner. The present application is not limited to the specific embodiments disclosed herein, but includes all technical solutions falling within the scope of the claims.

## Claims

1. A data correction method for a nuclear reactor core, wherein the method comprises:
acquiring an actual departure from nucleate boiling ratio (DNBR) of the nuclear reactor core at an acquisition moment;
acquiring a correction factor of the nuclear reactor core, wherein the correction factor is obtained by processing a theoretical DNBR and self-powered neutron detector (SPND) detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
correcting the actual DNBR by using the correction factor, to obtain a target DNBR of the nuclear reactor core at the acquisition moment.

2. The method according to claim 1, wherein the method further comprises:
simulating core operating states of the nuclear reactor core to obtain the theoretical DNBR and the SPND detection signals; and
simulating the calibration state of the nuclear reactor core to obtain the first core hot channel position and the calibration parameters, wherein the calibration state is any one of the core operating states.

3. The method according to claim 1, wherein processing the theoretical DNBR and the SPND detection signals of the nuclear reactor core, the first core hot channel position and the calibration parameters of the nuclear reactor core in the calibration state, and the positions of the failed SPNDs and the number of the failed SPNDs in the nuclear reactor core comprises:
determining, by using a core power reconstruction algorithm, a reconstructed core power distribution of the nuclear reactor core according to the SPND detection signals and the calibration parameters;
determining a first distance according to the first core hot channel position and the positions of the failed SPNDs; and
determining the correction factor according to the reconstructed core power distribution, the positions of the failed SPNDs, the number of the failed SPNDs, the first distance, and the theoretical DNBR.

4. The method according to claim 3, wherein determining the correction factor according to the reconstructed core power distribution, the positions of the failed SPNDs, the number of the failed SPNDs, the first distance, and the theoretical DNBR comprises:
determining a reconstructed DNBR and a second core hot channel position of the nuclear reactor core according to the reconstructed core power distribution; and
determining the correction factor according to the reconstructed DNBR, the second core hot channel position, the positions of the failed SPNDs, the number of the failed SPNDs, the first distance, and the theoretical DNBR.

5. The method according to claim 4, wherein determining the correction factor according to the reconstructed DNBR, the second core hot channel position, the positions of the failed SPNDs, the number of the failed SPNDs, the first distance, and the theoretical DNBR comprises:
determining a DNBR deviation according to the reconstructed DNBR and the theoretical DNBR;
determining a second distance according to the positions of the failed SPNDs and the second core hot channel position; and
determining the correction factor according to the first distance, the second distance, the number of the failed SPNDs, and the DNBR deviation.

6. The method according to claim 1, wherein correcting the actual DNBR by using the correction factor, to obtain the target DNBR of the nuclear reactor core at the acquisition moment comprises:
taking a sum of the correction factor and the actual DNBR as the target DNBR of the nuclear reactor core at the acquisition moment.

7. A data correction apparatus for a nuclear reactor core, wherein the apparatus comprises:
a data acquisition module, configured to acquire an actual DNBR of the nuclear reactor core at an acquisition moment;
a factor acquisition module, configured to acquire a correction factor of the nuclear reactor core, wherein the correction factor is obtained by processing a theoretical DNBR and SPND detection signals of the nuclear reactor core, a first core hot channel position and calibration parameters of the nuclear reactor core in a calibration state, and positions of failed SPNDs and a number of the failed SPNDs when there are the failed SPNDs in the nuclear reactor core; and
a data correction module, configured to correct the actual DNBR by using the correction factor, to obtain a target DNBR of the nuclear reactor core at the acquisition moment.

8. A computer device, comprising a memory and a processor, the memory storing a computer program, wherein the processor, when executing the computer program, implements steps of the method according to any one of claims 1 to 6.

9. A computer-readable storage medium, having a computer program stored therein, wherein the computer program, when executed by a processor, implements steps of the method according to any one of claims 1 to 6.

10. A computer program product, comprising a computer program, wherein the computer program, when executed by a processor, implements steps of the method according to any one of claims 1 to 6.
